# EUROPÄISCHE PATENTSCHRIFT

(11) **EP 3 975 716 B1**
(45) Veröffentlichungstag und Bekanntmachung des Hinweises auf die Patenterteilung: **28.01.2026**
(21) Anmeldenummer: 20734462.3
(22) Anmeldetag: 03.06.2020
(51) Int. Cl.: A01M 21/04, A01D 75/18, A01D 34/86

(54) **VORRICHTUNG ZUM BEHANDELN VON PFLANZEN MIT EINEM AN EINEM FAHRZEUG GEFÜHRTEN, SCHIEB UND/ODER ZIEHBAREN APPLIKATORARM, FAHRZEUG MIT EINER DERARTIGEN VORRICHTUNG UND VERWENDUNG DERSELBEN.**
DEVICE FOR TREATING PLANTS, USING AN APPLICATOR ARM PUSHED AND/OR PULLED BY A VEHICLE, VEHICLE COMPRISING SUCH A DEVICE AND USE OF SUCH A DEVICE
DISPOSITIF POUR TRAITER DES PLANTES AU MOYEN D'UN APPLICATEUR AGENCÉ SUR UN BRAS TIRÉ ET/OU POUSSÉ PAR UN VÉHICULE, VÉHICULE POURVU D'UN DISPOSITIF DE CE TYPE ET UTILISATION D'UN DISPOSITIF DE CE TYPE

(30) Priorität: 03.06.2019 DE 102019003833; 17.12.2019 DE 102019008709
(43) Veröffentlichungstag der Anmeldung: 06.04.2022
(73) Patentinhaber: Zasso Group AG, 6300 Zug (CH)
(72) Erfinder: FREIMANN, Christopher, 52249 Eschweiler (DE); EBERIUS, Matthias, 52146 Würselen (DE); FRANKO, Josef, 47906 Kempen (DE); DÜLBERG, Enno, 52074 Aachen (DE)
(74) Vertreter: Weidner Stern Jeschke
(86) Internationale Anmeldenummer: PCT/EP2020/000108
(87) Internationale Veröffentlichungsnummer: WO 2020/244797

(56) Entgegenhaltungen:
- EP-A1- 0 078 730
- CA-A- 1 185 216
- CN-B- 105 325 395
- DE-A1- 102004 022 202
- FR-A1- 2 990 325
- JP-A- 2017 158 533
- US-A- 3 682 395

## Beschreibung

Die Erfindung betrifft eine Vorrichtung zum Behandeln von Pflanzen mit einem Applikator, der an einem Applikatorhalter befestigt ist. Außerdem betrifft die Erfindung ein Fahrzeug mit einer derartigen Vorrichtung und eine Verwendung einer derartigen Vorrichtung

Wenn Vegetationsbehandlungsgeräte zwischen Reihenobjekten wie z. B. Stämmen, Sträucher, Reben, Sprossen, Pfeiler oder Pfosten arbeiten sollen, ist es nötig, dass die Bearbeitungsgeräte die Reihenobjekte einerseits nicht beschädigen oder zerstören, andererseits aber möglichst nahe um die Reihenobjekte herum die zu entfernende Vegetation behandeln. Diese Entfernung von Pflanzenmaterial ist besonders dann ein kritischer Vorgang, wenn der Wirkstoff durch mechanische Berührung der zu behandelnden Vegetation vermittelt wird und keine aufsprühbare Chemie bzw. durch Verschüttung wirkende Erde ist.

Da eine Vielzahl von Vegetationsbehandlungsgeräten ein erhebliches Eigengewicht und damit Massenträgheit hat bzw. gegen einen großen Widerstand durch den Boden oder über die Fläche geschoben werden muss, wird sehr häufig eine aktive Bewegung des Behandlungsgerätes um die Hindernisse durch extern gesteuerte mechanische Aktoren benötigt.

Um dies technisch umzusetzen, werden entweder manuell/visuell oder mit optischen oder mechanischen Sensoren die Hindernisse erkannt und daraufhin eine Bewegung der Behandlungsgeräte weg vom Reihenobjekt ausgelöst. Da die Sensoren und die dadurch ausgelösten Bewegungen der Behandlungsgeräte Massenträgheit und Reaktionsweg und -zeit haben, werden dies Sensoren separat vor den Arbeitselementen installiert um frühzeitig auszulösen. Der Einsatz von Sensoren ist jedoch generell problematisch und fehlerbehaftet. Die nötige optische Sicht auf die harten Hindernisse ist öfters von weichen Pflanzenteilen wie Blättern, Blüten oder Fruchtständen oder genau durch die dichte zu entfernende Vegetation versperrt, sodass konservativ eingestellte Sensoren aus Sicherheitsgründen zu früh auslösen, der Applikator aus der Reihe herausschwenkt und das Behandlungsergebnis schlecht wird. Wegen der hohen Variabilität der Vegetation um die Reihenobjekte und die Variabilität biologischer Reihenobjekte selbst, versagen optische Methoden häufig aufgrund von Fehlerkennungen oder durch Verschmutzung.

Auch mechanische Sensoren können z. B. schrägstehende Stämme zu spät oder viel zu früh erkennen, sodass es zu Beschädigungen kommt oder die Hindernisse zu weit umfahren werden. Zusätzlich kann es immer unerwartete, niedrige Hindernisse geben, die das Behandlungsgerät beschädigen können, aber von optischen und mechanischen Sensoren nicht erkannt werden. Zur Optimierung der Verfahren unter diesen Randbedingungen können die Fahrzeuge mit den Behandlungsgeräten zumeist nur mit niedrigen Arbeitsgeschwindigkeiten fahren und machen Fehler, bei denen im Normalfall die Sensoren so eingestellt werden, dass im Zweifelsfall eher zu wenig Fläche bearbeitet wird, als dass Hindernisse getroffen werden und es zu Beschädigungen kommen kann.

Bei Verfahren, besonders im landwirtschaftlichen Bereich, die Bodenmaterial bewegen, wird in vielen Fällen als Sicherheitsabstand und zur Dämpfung Bodenmaterial statt das Behandlungsgerät selbst an die Reihenobjekte geschoben oder weggeschoben mit dem Ziel, unerwünschte Vegetation auszugraben oder zu verschütten. Derartige Verfahren fördern jedoch den Neuaufwuchs von Unkraut, da Samen durch die Bodenbewegung zum Keimen angeregt werden oder neu angeflogene Samen ein gutes Saatbett vorfinden. Dies führt zu einer hohen, kostentreibenden Bearbeitungshäufigkeit und darüber hinaus auch zu Erosionsgefahren und Schädigungen der Bodenstruktur. Darüber hinaus wirkt Verschütten und Ausreißen nicht bei schon hoch aufgewachsenen Pflanzen und bei Vegetation direkt am Hindernis. In Bereichen, in denen der Boden nicht bewegt werden darf oder kann (Straßenränder, Schotterflächen, hoher Steingehalt im Boden), sind solche Verfahren nicht anwendbar.

Alternativ dazu schlagen die aktiven Behandlungselemente direkt an die Hindernisse an. In diesem Fall müssen die Hindernisse dann so stabil sein, dass sie nicht oder nur unwesentlich beschädigt werden. Dies bedeutet, dass die Einwirkungsenergie bei der Berührung der Objekte mit dem Behandlungselement (mechanisch oder z. B. thermisch) klein sein muss. Dazu muss entweder das Behandlungselement sehr leicht sein, mit wenig Kraft vorwärts bewegt werden oder die Fahrtgeschwindigkeit muss sehr stark minimiert werden. Dies bedeutet jedoch nach dem Stand der Technik, dass entweder auch die Unkräuter nur oberflächlich geschädigt werden und schnell wieder aufwachsen oder dass die Strecken/Flächenleistung gering ist, was in beiden Fällen ökonomisch unvorteilhaft ist.

Wird bei irgendeinem der Verfahren ein nicht zu unterschreitender Minimalabstand zum Hindernis eingestellt, um Verletzungen zu vermeiden, führt das immer zu erheblicher manueller Nacharbeit oder zu einem deutlich verschlechterten Arbeitsergebnis führt.

Diese Beschränkungen verringern dementsprechend insgesamt die Einsetzbarkeit der im weitesten Sinne mechanisch/physikalisch/thermisch arbeitenden Geräte erheblich.

Nur chemische Verfahren haben derartige Probleme kaum, stehen aber aufgrund von Resistenzen, Akzeptanz und gesetzlichen Regeln immer seltener zur Verfügung.

Aus CA 1 185 214 A ist ein fahrzeuggestütztes Gerät zum vollständigen Versprühen von Flüssigkeit um unbewegliche aufrechtstehende Pflanzen mit einem Gelenkausleger bekannt, bei welchem ein innerer Auslegerelement seitlich an einem Traktor befestigt ist und an seinem anderen Ende über ein oberes Drehgelenk mit einem äußeren Auslegerelement verbunden ist, wobei das äußere Auslegerelement am oberen Drehgelenk seitlich wegschenkbar zur vertikalen Achse aufgehängt ist und an seinem unteren Ende einen drehbaren Sprühkopf aufweist.

EP 0 078 730 A1 beschreibt eine Vorrichtung zur Behandlung von Pflanzkulturen durch Befeuchtung mit einem röhrenförmigen Behälter, in dessen Inneren sich die Enden flexibler und weicher Dochte mit Kapillareigenschaften befinden, welche mit ihrem gegenüberliegenden Ende und dem wesentlichen Teil ihrer Länge auf der Vegetation aufliegen, wobei die Vorrichtung mehrere Baugruppen jeweils mit mehreren röhrenförmigen Behältern aufweist. Eine erste Baugruppe ist fest in einer Achse eines zentralen Rahmens montiert, während zwei seitliche Baugruppen schwenkbar jeweils an einem senkrecht zum zentralen Rahmen stehenden Ausleger montiert sind. Jede seitliche Baugruppe weist einen Tragarm für die Dochte auf, welcher um eine Achse in der Nähe seines Endes ausgerichtet zur Mitte schwenkbar montiert ist. Diese Achse ist selbst wiederum schwenkbar am Ende einer Verbindungsstange montiert, deren anderes Ende an dem senkrecht zum zentralem Rahmen angeordneten Ausleger schwenkbar ist. Mittels einer Feder wird das nach außen gerichtete das Ende der Verbindungsstange ständig nach außen gedrückt, während mittels eines Rückstellmechanismus der Tragarm bei Kontakt an seiner Außenseite mit einer Kulturpflanze in Richtung auf den zentralen Rahmen eingeklappt und somit die Behandlungsreichweite der Dochte verringert wird.

Bei fast allen Verfahren muss jedoch für die funktionelle Wirkung des Arbeitselementes eine klare Vorzugsrichtung gewährleistet werden. Bei vielen Arbeitselementen insbesondere schneidenden oder schlagenden Geräten (Mähen, Mulchen, Eggen, Unterschneiden), abknickenden Geräten (Walzen) und überstreifenden Geräten (Applikation von Strom, Chemikalien durch Berührung) ist es nötig, dass ein Funktionsbalken in Arbeitsbreite möglichst immer annähernd 90° quer zur Bewegungsrichtung des aktiven Arbeitselementes bewegt wird. Nur so wird die Funktion generell bzw. die gleichmäßige Dosierung möglich.

Bei allen Verfahren mit Dosierfunktion auf eine Fläche (Chemie, Elektro) oder Werkzeugen, die ein optimales Geschwindigkeitsfenster haben, ist es zusätzlich wichtig, dass die Bewegung möglichst gleichförmig, d. h. mit ähnlicher Geschwindigkeit ohne starke Geschwindigkeitsspitzen erfolgt.

Für eine systematische Lösung des beschriebenen technisch/biologischen Problems ist es dementsprechend nötig, die nachfolgend beschriebenen Faktoren der Arbeitselemente zu berücksichtigen und durch konstruktive Gestaltung zu optimieren. Entscheidend ist die Nutzung eines möglichst schnell und langanhaltend wirksamen Behandlungsverfahrens (bestehend aus einer oder mehreren kombinationsfähigen Maßnahmen), welches im Normalfall keinen Boden bewegt, viele Arten der unerwünschten Vegetation wirksam und langanhaltend kontrolliert und die Reihenobjekte weder oberirdisch noch unterirdisch schädigt.

Dabei sollte bei möglichst allen Betriebszuständen die zu jedem Zeitpunkt auf das Hindernis wirkende Kraft als Aufprall auf das Reihenobjekt oder Entlangschleifen am Reihenobjekt minimiert werden, um die Beschädigung des Reihenobjekts und die Beschädigung des Arbeitselementes zu minimieren. Gleichzeitig sollte die Arbeitsgeschwindigkeit maximiert werden (je nach Anwendung auch 4 bis 50 km/h).

Diese Aufgabe wird gelöst durch eine Vorrichtung gemäß Anspruch 1. Sie ist eingerichtet zum Schieben und/oder Ziehen mittels eines Fahrzeuges über einen Bodenbereich und zum Behandeln von Pflanzen mit einem Applikator, wobei der Applikator an einem Applikatorhalter befestigt ist, und die Vorrichtung einen primärer Arbeitsarm aufweist, an dessen erstem Ende ein Geräteträger gelenkig angeordnet ist und an dessen zweitem Ende der Applikatorhalter gelenkig angeordnet ist, und das gelenkige Anordnen von Geräteträger und Applikatorhalter mittels zweier Drehgelenke mit im Wesentlichen parallelen Achsen ausgebildet ist, wobei eine Seite des primären Arbeitsarms in einem spitzen Winkel zum Geräteträger angeordnet ist und an einer gegenüberliegenden Seite des primären Arbeitsarms ein Abstreifer angeordnet ist, und am Geräteträger eine um eine erste Achse drehbare Scheibe angeordnet ist und der primäre Arbeitsarm um eine zur ersten Achse parallele Achse drehbar an der Scheibe angeordnet ist. Des Weiteren wird die Aufgabe durch ein Fahrzeug mit den Merkmalen des Anspruchs 12 sowie eine Verwendung nach Anspruch 13 gelöst. Vorteilhafte Weiterbildungen sind Gegenstand der Unteransprüche.

Es wird eine Basisstruktur als Kombination verschiedener Bewegungselemente vorgeschlagen, in die verschiedene Behandlungsmodule eingesetzt werden können. Die im weiteren Text dargestellte Beschreibung bezieht sich in der Hauptsache auf den Einsatz bei der elektrophysikalischen Abtötung unerwünschter Vegetation, schließt aber auch den Einsatz bei sich analog bewegenden alleine oder in Kombination arbeitenden Behandlungsmodulen, die einer Ausrichtung möglichst quer zur Fortbewegungsrichtung bedürfen (z. B. bei physikalisch basierten Methoden wie Walzen, Schneiden, Bestrahlen, Bestreichen) mit ein.

Dabei werden die folgenden Einzelelemente zu einer Vorrichtung kombiniert.

Die Grundidee ist es, die Wirkelemente so kompakt, effizient, klein und leicht zu gestalten, dass sie keine zusätzliche Sensorik benötigt und trotzdem den Hindernisobjekten schadensfrei selbsttätig ausweichen, aber gleichzeitig durch optimierte Orientierung relativ zur Fahrtrichtung die maximale Wirkung erreichen.

Zum Schutze der Objekte bei gleichzeitiger ausreichend fester Berührung ist die gesamte Einheit vorzugsweise so konzipiert, dass sie zum Objekt hin immer weicher wird (progressive Flexibilität).

Während der Geräteträger nur bei massiven Hindernissen als Anfahrschutz ausweichen kann, schwenkt der Arm routinemäßig bei Hindernisberührung ein. Das äußerste Applikatorende ist nochmals vorzugsweise federnd gelagert, sodass hier mit minimalem Kollisionsimpuls bzw. Kraftübertragung das Objekt berührt werden kann.

Die Behandlungseinrichtung (hier die Applikatoren für elektrische Hochspannung ggf. in Verfahrenskombinationen) ist so geteilt, dass der Schwerpunkt der Mehrheit der Vorrichtung, die nicht direkt zwischen den Hindernisobjekten arbeiten muss in der Hauptbewegungsrichtung geradeausläuft.

Das Gewicht der beweglichen Applikatorvorrichtung für die Wirkung zwischen den Hindernisobjekten wird durch den Einsatz von leichten Materialien wie z. B. GFK und hochfesten Blechen minimiert. Diese Einheit arbeitet im passiven Nachlauf hinter einem vertikalen Drehgelenk.

Durch die geringe Höhe und Kompaktheit findet die Wirkung umfassend fast im gesamten überstrichenen Bereich statt. Kurze Hebelwege in Kombination mit einer progressiven Auslenkung nach flachem Aufprall auf der gebogenen Gleitleiste (ggf. mit weiteren Federelementen) führen zu einer gleichbleibend niedrigen Impulsübertragung auf das Hindernisobjekt.

Die eingesetzten Applikatoren schleifen im Falle des Einsatzes von elektrischer Hochspannung mit feingliedrigen Applikatorzungen mit wenig Widerstand über den Boden und die Pflanzen, sodass für den Geradeauslauf nur eine geringe Gegenkraft nötig ist. Diese Gegenkraft wird im Normalfall linear oder progressiv von einem Federelement bereitgestellt. Zur weiteren Minimierung kann die Federkraft mechanisch oder sensorisch selbstkalibierend eingestellt werden, sodass ohne Berührung der Gleitleiste (durch die definierten Hindernisobjekte) immer eine Minimalgegenkraft dynamisch vom System eingestellt wird, die gerade zur Erhaltung des Geradeauslaufs ausreicht.

Für den Fall, dass elektrischer Strom zweipolig auf den Boden übertragen, bzw. vom Boden wieder aufgenommen werden muss, können die beiden Pole entweder auf der selben beweglichen Applikatoreinheit oder zwei beweglichen Applikatoreinheiten sitzen oder einer der Pole befindet sich statisch am Geräteträger. Weitere Applikatoreinheiten, die nur geradeaus laufen, können statisch parallel angeordnet werden.

Für den Fall, dass keine Hochspannungsapplikatoren als Behandlungselement eingesetzt werden, kann z. B. die Walze, der Mäher oder das sonstige Gerät durch einen kompensatorischen Eigenantrieb mit analoger Steuerung seine Widerstandskraft minimieren.

Die im Fall der Auslegung auftretenden Seitenkräfte werden dadurch weiter minimiert, dass das Wirkungselement (im Normalfall der elektrische Applikator) zusätzlich über ein weiteres vertikales Drehgelenk mit dem beweglichen Ausleger verbunden ist und auch darüber wieder passiv im Nachlauf mit oder ohne Anschläge arbeitet. Als Konsequenz dieses doppelten Nachlaufelementes bewegt sich der Applikator/das Wirkelement deutlich enger, gleichförmiger und objektschonender (weniger Beschleunigung bedeutet auch weniger Impuls auf das Hindernisobjekt) um das Hindernisobjekt herum. Da der Applikator durch seine Nachlaufeigenschaften seine optimale Bewegungsrichtung (90° zwischen Arbeitsachse und Bewegungsrichtung) annähernd beibehält, entstehen auch kein impulserhöhender und widerstandsbehafteter Seitenschlupf oder Seitenverformung der Applikatoren oder der anderen Wirkelemente.

Der Abstreifer am hinteren Ende der Gleitleiste ist verstellbar und kann der Applikatordynamik und Applikatorhöhe so angepasst werden, dass der Applikator direkt am Hindernisobjekt vorbeigleitet und von diesem sofern nötig nur durch eine am Applikator selbst befindliche Isolationsschleifleiste isoliert /räumlich getrennt wird.

Durch die optimale Arbeitsrichtung bleiben auch die Wirkung und die überstrichene Fläche maximal. Da der Gesamtapplikator jeglichem Hindernis ab einer voreingestellten Minimalsteifigkeit genau in dem Bereich, in dem der kompakte Applikator sich befindet, ausweicht, werden Fehler beim Ausweichen eliminiert und auch die Abstände der Hindernisse spielen keine Rolle mehr.

Die hier beschriebene Vorrichtung kann mit einem oder mit zwei Applikatoren (unterschiedlicher Polarität) bestückt sein. Für den Fall, dass zwei Applikatoren in einer Einheit sitzen, ist es vorteilhaft, wenn der erste Applikator nur knapp bis zum Boden reicht, während der in Fahrtrichtung hintere Applikator die doppelte Nachlaufeigenschaft erzeugt und den Bodenkontakt zu Kleinpflanzen herstellt.

Bei Gerätekombinationen wird ausschließlich das Applikatorelement ausgetauscht und wenn das Ersatzelement keine eigenen Nachlaufeigenschaften entwickeln kann, eine Reibungseinheit aus geeigneten Scheiben, Schneiden oder Filamenten zugebaut.

Neben der Standardanwendung bei Hindernissen, zwischen denen das bewegliche Element im Regelfall eintaucht (Objektabstand größer als Objektdurchmesser), kann die erfindungsgemäße Einheit auch für die Fälle eingesetzt werden, bei denen bei im Normalfall durchgehenden Hindernisreihen durch deren variierenden Abstand zwischen Trägerfahrzeug und Applikator eine Abstandsvariabilität entsteht. Diese Abstandsveränderungen können durch Schwankungen im Geradeauslauf des Fahrzeuges (Lenkbewegungen, Reifenelastizität etc.) oder auch durch variierenden Reihenabstand (z. B. Saat oder Pflanzkulturen mit Einzelvariation der Pflanzen bzw., Reihenabstandsvariation durch verschiedene Saatvorgänge oder wachsende Pflanzengröße) entstehen. Während bei hohen Dauerkulturen wie Wein oder Leitplanken im Straßenverkehr sich die Reihenführung noch an den durchgehenden Objekten orientieren kann, besteht diese Möglichkeit bei einjährigen Kulturen wie z. B. Mais oder kohl-/salatartig überkragenden Pflanzen oft nicht, da die Sicht oft für Sensoren versperrt ist und die Reaktionszeiten durch den engen Pflanzabstand zu kurz sind. Durch manuelle Voreinstellungen auf die sich verändernden Reihenbreiten würden die unbearbeiteten Bereiche erheblich vergrößert, was die Methodeneffizienz deutlich verringern würde, da für eine effiziente Vegetationskontrolle sich die potentiell vermehrungsfähigen Einheiten (Samen, Knollen, Rhizomtriebe) im Laufe einer Vegetationsperiode nicht erhöhen dürfen.

Auch der Einsatz von objekterkennender Robotik löst das Problem nicht, da vielen Sensoren die Sicht auf den Stamm oder Stiel der Pflanzen und den direkt angrenzenden, von unerwünschter Vegetation zu befreienden Boden zumeist nicht möglich ist. Ursache dafür sind überkragendes Blattwerk und perspektivische Kamerapositionen, die zu Verdeckungen führen. Weiterhin gibt es begrenzte Rechenzeiten und ökonomisch sinnvolle Gerätekosten, die eine kontinuierliche Erstellung dreidimensionaler Abbilder aller zu schonenden Pflanzen nicht möglich oder ökonomisch sinnvoll machen. Hier können effizient geführte Applikatoren viel Geld und technische Gesamtkosten einsparen und die Systemrobustheit erhöhen.

Die Vorrichtung mit Abstreifern und doppeltem Nachlauf kann darüber hinaus auch bei beweglichen Befestigungen eingesetzt werden. In diesem Fall ermöglicht die Vorrichtung die Kombination z. B. von flexiblen sternartigen Applikatoren, die ohne Sensoren Hindernisse tiefergehend umgreifen mit Wirkprinzipien, die eine definierte überstreichende Arbeitsrichtung erforderlich machen (im Idealfall 90° zur Bewegungsrichtung).

Der Einsatz von nachlaufenden, einfach oder doppelt gelagerten Applikatoreinheiten ist auch bei ausladenden Großgeräten sinnvoll und vorteilhaft, die auf Feldern mit möglichst engen Radien gedreht werden müssen, ohne dass Seitenkräfte entstehen, welche Applikatoren zerstören könnten oder eine viel schwerere Haltestruktur erforderlich machen würden, die wiederum das Gerät verteuert bzw. die Ackerböden durch Kompression schädigt. Gerade bei weitausragenden Geräten können schon durch geringe Lenkbewegungen des Traktors hohe seitliche Ausschläge am Applikator entstehen.

Die Vorrichtung kann für die Führung eines selbstgeführten Applikators zur Vegetationskontrolle und zur engen Umfahrung von Hindernissen und Hindernisrandbehandlung dienen und Nachlaufeigenschaften aufweisen. Eine minimierte Energieübertragung auf zu umfahrende Hindernisobjekte kann durch die folgenden Merkmale erreicht werden: Die Vorrichtung benötigt keinen Sensor für das Umfahren von Objekten. Die Vorrichtung besitzt mindestens zwei hierarchisch geordnete bewegliche Lager oder ein funktional gleicharbeitendes elastisches Element. Der Fixpunkt des übergeordneten Lagers kann sich an einem feststehenden oder beweglichen Element befinden. Das übergeordnete Lager kann mit dem übergeordneten Arm durch einen schonenden Abstreifer an diesem Arm entlang der Hindernisse bewegt werden. Das nachgeordnete Lager kann die Befestigung des Applikators tragen. Der Applikator kann aus mit Hochspannung beaufschlagten Metalllamellen bestehen. Der Applikator kann allein oder im Verbund mit weiteren nachlaufenden Applikatoren arbeiten. Durch die Doppellagerung und die Nachlaufeigenschaften können Geschwindigkeitsspitzen vermieden werden und eine möglichst gleichförmige Bewegung vollführt werden. Der Applikatorträger kann weitgehend in rechtem Winkel zur Fahrtrichtung gehalten werden.

Der Applikator kann ein richtungssensitiver möglichst gleichförmig zu bewegender Aktor zur Pflanzenkontrolle sein, der seine Wirkung mechanisch, chemisch, thermisch oder elektrisch auf die Vegetation oder die Zielobjekte überträgt. Dis ist am besten zu erreichen, wenn er möglichst quer zur Bewegungsrichtung orientiert ist. Der Fixpunkt des übergeordneten Lagers kann robotisch in die Nähe von Hindernisobjekten bewegt werden. Der schonende Abstreifer kann eine gebogene Führung, eine elastische feststehende Führung oder ein elastisch umlaufendes Band sein. Diese Führung kann eine progressive Steigung haben, um den Aufprallimpuls und die nachfolgende auf das Hindernis wirkende Kraft unabhängig von der Aufprallstelle über den gesamten zu erwartenden Aufprallbereich möglichst gleichmäßig klein halten. Der Abstreifer kann ein separat bewegliches Endstück besitzen, welches durch Form und Anstellungswinkel eine Feinsteuerung der Applikatorposition bei der Umfahrung z. B. bei unterschiedlichen Höheneinstellungen des Applikators ermöglicht. Der Ausleger kann einen Verbund von einem oder mehreren Applikatorführungen tragen, die sich drehen können. Das nachgeordnete Lager kann beweglich auf einem beweglichen Kreisradius als übergeordnetem Lager angeordnet sein. Die gesamte Applikatoreinheit ist dann kreisförmig abdeckbar und richtungsinvariant.

Die Position und Bewegung der über- und nachgeordneten Lager können technisch abgefragt werden, um daraus Informationen für die Bewegung der robotischen Gesamteinheit bzw. z. B. von Verschiebeeirichtungen oder die Servounterstützung von Lagern oder Rückstellgliedern abzuleiten. Hierzu gehören insbesondere Härteverstellungen von Rückstellfedern und die Gesamtausrichtung der Vegetationskontrolleinheit relativ zum Untergrund und den sich darauf befindlichen Hindernissen oder die servounterstützte Drehung von mehrarmigen Auslegereinheiten zur Geschwindigkeitsminimierung bei der Kollision mit Hindernisobjekten und eine Servounterstützung von rotatorisch bewegten Behandlungseinheiten, um deren Massenträgheit zu minimieren.

Der Applikator selbst kann mit auf dem Boden geführten Lamellen nochmals seitlich über den Führungsarm herausstehen, um mit der progressiv weichsten Systemspitze das Hindernis ohne Beschädigungsrisiko zu berühren. Die Seitenkante dieser seitlichen Applikatorlamelle kann an der Außenseite isoliert sein, um Spannungsüberschläge zu vermeiden.

Die berührenden Applikatoren können durch Abstände zwischen den Lamellen, eine Verdrehung von Lamellen oder besondere Führungslamellen für eine dynamisch flexible Nachführung der Applikatorträger möglichst rechtwinklig zur Bewegungsrichtung der Gesamteinheit sorgen. Alternativ dazu können bei höhenselektiven Anwendungen und schlecht selbstführenden Applikatoren rollende Scheiben oder starre Schneidscheiben eingesetzt werden.

Die Zielfläche des Applikators können sowohl der Untergrund um das Hindernis sein kann als auch Vegetation, die räumlich nahe senkrecht direkt neben dem Hindernis wächst, als auch Vegetationsteile des Hindernisses selbst sein, sofern es sich beim Hindernis um ein pflanzliches Objekt handelt (z.B. unerwünschte Seitenschosser an Weinreben oder Bäumen).

Wenn der der Applikator zweipolig ist, kann nur der hintere Applikator permanent den Boden berühren, um die Gesamteinheit zuführen. Der in Fahrtrichtung vordere Applikator berührt den Boden kaum oder gar nicht. Der hintere Applikator ist ein Standardapplikator mit flächigem Auftrag oder er besteht optional zur Effektminimierung auf niedrige Pflanzen aus einer oder mehreren nur am unteren Rand leitfähigen Scheiben oder sehr schmalen Schleifeinheiten.

In einer weiteren Ausführungsform ist der Applikatorhalter derart in einem spitzen Winkel zum Arbeitsarm angeordnet ist, dass seine eine Seite in Richtung der parallelen Achsen näher am Arbeitsarm als seine andere Seite angeordnet ist.

Vorteilhaft ist es, wenn mit einer Einrichtung zur Erfassung der Bodenimpedanz am Geräteträger und/oder am primären Arbeitsarm und/oder am Applikatorhalter die Bodenimpedanz erfasst wird und an einen Rechner übermittelt wird, der die Anzahl von Hindernissen ermittelt. Die Erfindung wird im Folgenden mit Bezug auf die Zeichnung näher beschrieben. Es zeigt
- Figur 1: eine Draufsicht und eine Seitenansicht auf eine Vorrichtung mit Schwingapplikator,
- Figur 2: eine Draufsicht auf eine schwenkende Grundeinheit mit mehreren Applikatoren,
- Figur 3: eine Draufsicht auf eine sternförmige offen drehende Einheit,
- Figur 4: eine Draufsicht und eine Seitenansicht eines Drehlagers mit innen liegendem Applikator und runder Abdeckung,
- Figur 5: eine Draufsicht auf eine Rundabdeckung auf einem Sternapplikator,
- Figur 6: eine Draufsicht auf eine drehende Einheit mit mehreren Applikatoren in Rundabdeckung,
- Figur 7: eine Draufsicht auf eine robotische Einheit einreihig und mehrreihig mit Linearverschiebung,
- Figur 8: eine Draufsicht auf eine robotische Einheit mit Drehverschiebung,
- Figur 9: eine Draufsicht auf einen starren Abstreifertyp mit justierbarem Ende,
- Figur 10: eine Draufsicht auf einen elastischer Abstreifer,
- Figur 11: eine Draufsicht auf ein elastisches Rollenband als Abstreifer,
- Figur 12: eine Draufsicht auf mehrere Applikatortypen,
- Figur 13: Draufsichten und Seitenansichten unterschiedlicher Mehrfachapplikatoren mit hinterer Führung,
- Figur 14: eine Draufsicht und Seitenansicht des Schwingapplikators im Kombination mit geradeauslaufenden Applikatoren und
- Figur 15: Draufsichten auf Fahrzeugkonfigurationen mit angebrachten Applikatoreinheiten.

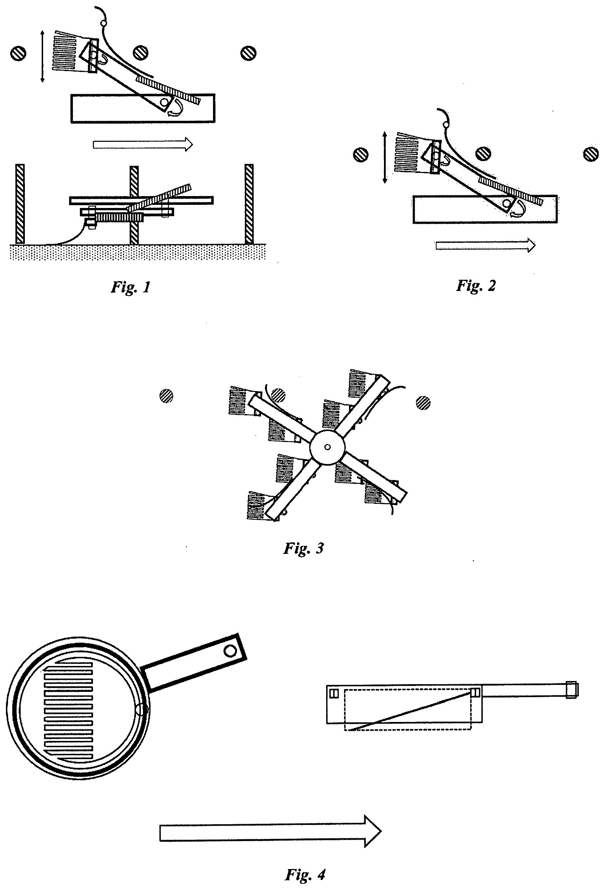

Die in Figur 1 gezeigte Vorrichtung besteht aus einem Applikator, der an einem Applikatorhalter befestigt ist, und einem Geräteträger, der an einem Transportfahrzeug (nicht gezeichnet) befestigt werden kann. Mittels eines frei beweglichen primären Drehgelenks mit einem Rückstellmechanismus, der beispielsweise eine Feder oder ein Druckzylinder sein kann, ist ein primärer Arbeitsarm befestigt. An diesem Arbeitsarm befindet sich ein weiteres frei bewegliches sekundäres Drehgelenk, welches den Applikatorhalter aufgrund der Bodenreibung des Applikators immer möglichst quer zur Bewegungsrichung des Applikators dreht und bei seitlich einwirkenden Kräften (Umfahren von Hindernissen den seitlichen Schub und die dadurch hervorgerufene Geschwindigkeitsänderung der Bewegung der Vorrichtung relativ zum Untergrund physikalisch durch zeitweise Drehung ausgleicht. Somit sind an einem ersten Ende des Arbeitsarms der Geräteträger und an dem gegenüberliegenden zweiten Ende der Applikatorhalter befestigt. Der Rückstellmechanismus hält den Arbeitsarm so, dass er als Positioniereinrichtung wirkt.

Ein seitlicher Abstreifer vergleichmäßigt durch seine progressive Biegung und/oder seine Federungseigenschaften sowohl den Aufprallimpuls als auch die danach auf das Hindernis ausgeübte Kraft unabhängig vom Aufprallpunkt. Der hintere Endabstreiferteil ist beweglich montiert und kann zur möglichst engen Objektumfahrung bei maximaler Applikationsnähe eingestellt werden. Der Teil des Applikators, der sich am stärksten dem Hindernis nährt, kann durch Ausstellung und/oder eine spezielle reibungsmindernde und isolierende Beschichtung oder spezielle Elemente das objektnächste und weichste progressive Federungselement darstellen.

Bei der in der Figur 2 gezeigten schwenkenden Vorrichtung mit mehreren Applikatoren können bei analogem Bau wie in der Figur 1 gezeigt am primären Arbeitsarm mehrere Applikatoren mittels einer nachlaufenden Vorrichtung angebracht sein. Dies ist insbesondere dann wichtig, wenn der Reibungswiderstand bei hohen Arbeitsbreiten minimiert werden soll oder elektrische Applikatoren mit unterschiedlicher Leistung oder Polarität (Pluspol, Minuspol) Verwendung finden.

Um noch tiefer zwischen Hindernisse hineingreifen zu können, ist es sinnvoll, wie in Figur 3 gezeigt, mit sternförmig angeordneten Applikatorarmen mit 3 oder mehreren Armen zu arbeiten. Der Stern dreht sich bedingt durch die Hindernisse, besser jedoch auch noch zusätzlich durch eine flachere Ausrichtung im Bereich der Hindernisse (für erhöhte Reibung). Dadurch wird die Aufprallenergie zusätzlich verringert. Abstreifer können den Aufprall zusätzlich dämpfen. Die Applikatoren drehen sich als Nachläufer immer von selbst in die Richtung des geringsten Reibungswiderstandes.

Die Figur 4 zeigt ein Drehlager mit innenliegendem Applikator und einer Rundabdeckung. Zum Ersatz z.B. von Kreiselmähwerken und für die Nutzung sehr robuster kreisförmiger Applikatorabdeckungen (mit und ohne weitere Abstreifer) ist es nötig, dass sich der Applikator mit möglichst großer Arbeitsbreite auf einer kreisförmigen Grundfläche im Nachlauf bewegen kann. Dazu wird der äußere Rand oder eine etwas weiter innenliegender Ring als vollständig drehbares sekundäres Drehlager ausgelegt. Der gegenüber der haubenartigen Applikatorabdeckung drehbare Applikator wird an einer Stelle am Drehlager fixiert. Innerhalb der Gesamtkreisfläche befindet sich dann der schrägstehende Applikator mit Bodenkontakt im Bereich des der Befestigung gegenüberliegenden Halbkreises. Bei Bedarf hat der Applikator eine eigene, sich mitdrehende Seitenabdeckung, die den Einzug von Pflanzenmaterial von vorne erleichtert. Ein zusätzlicher Abstreifer (nicht gezeigt) ist möglich, wenn der Berührungsimpuls minimiert werden soll. Die haubenartige Applikatorabdeckung kann dann an mit einem primären Applikatorarm an übergeordneten Einheiten mit einem weiteren primären Drehlager analog aller anderen Nachlaufeinheiten befestigt werden.

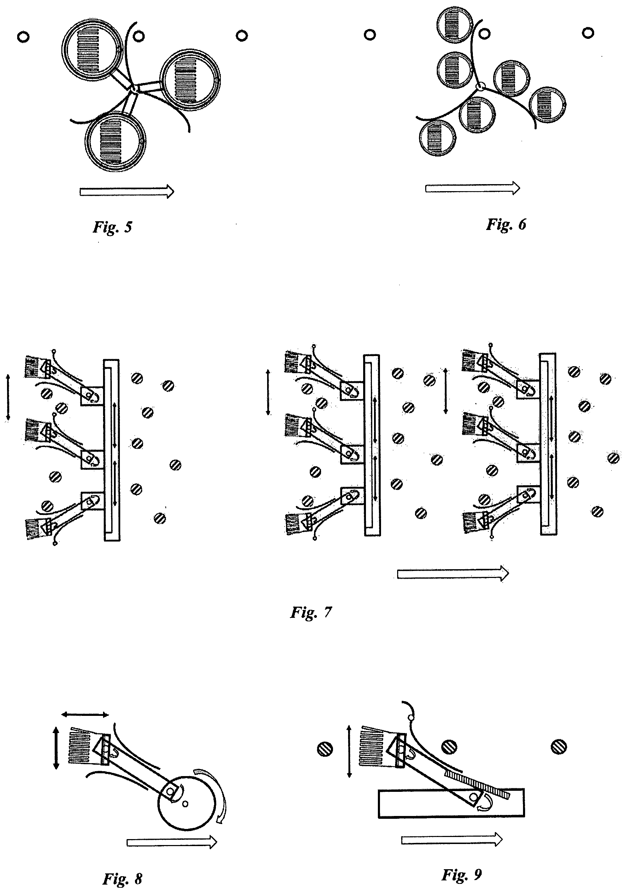

Eine Rundabdeckung auf einem Sternapplikator als Ansicht von oben zeigt die Figur 5. Auch Sternapplikatoren mit 2 und mehr Armen (hier gezeigt mit drei Armen) können als Rundapplikator ausgeführt werden. Diese Einheiten sind bei empfindlicheren Zielobjekten mit Abstreifern sinnvoll einzusetzen. Ohne Abstreifer sind sie für sehr robuste Anwendungen geeignet. Das zentrale Lager um welches sich der Sternapplikator dreht, kann fix an einem Ausleger (nicht gezeigt) befestigt sein oder robotisch gesteuert werden.

Sternapplikatoren können auch wie in Figur 6 gezeigt mit mehreren Rundapplikatoreinheiten an einem Arm ausgeführt werden. Da starre Abstreifer bei Sternapplikatoren aufgrund er schockdämpfenden Drehbewegung möglich sind, können diese auch zur Befestigung der Applikatoreinheiten genutzt werden. Das zentrale Lager ist dann an einem fixen oder robotischen Arm des Trägerfahrzeugs befestigt (nicht gezeigt).

Die einzelnen Applikatoreinheiten der in Figur 7 gezeigten Einheit mit Nachlauf sind für den Einsatz in flächigen Anwendungen mit unregelmäßigen zu schützenden Objekten oder unregelmäßigem Unkrautwuchs. Gemäß Ausführungsformen, welche nicht erfindungsgemäß sind, können die Applikatoreinheiten auch auf einem oder mehreren robotischen Einheiten mit Linearverschiebung befestigt sein. Jede einzelne Linearverschiebung bewegt sich unabhängig nach robotischen Vorgaben. Der sich frei drehende ggf. durch eine Rückstellfeder (nicht gezeigt) in den Freiheitsgraden beschränkte Primärarm folgt dann der robotisch vorberechneten Bahn. Die Feinjustierung entlang der Zielobjekte findet dann aber wieder durch die Abstreifer und nachlaufenden Applikatoren präzise geführt statt. Mehrere Applikatorreihen sind insbesondere dann sinnvoll, wenn Applikatoren mit unterschiedlicher Polarität eingesetzt werden.

Erfindungsgemäß ist der primäre Applikatorarm wie in Figur 8 gezeigt auf einer drehbaren Scheibe befestigt. Damit kann durch eine robotische gesteuerte Drehbewegung der Applikatorarm mit allen seinen Untereinheiten sowohl vor und zurück in Richtung der Pfeile (in/gegen Fahrtrichtung) als auch nach rechts und links in Richtung der Pfeile bewegt werden. Geschlossene Drehmotoren sind in der staubigen Feldumgebung oft robuster und einfacher zu handhaben als Linearverschiebungen.

Der in der Figur 9 gezeigte starre Abstreifer ist numerisch oder empirisch so gekrümmt, dass der auf das berührte Objekt übertragene Impuls bzw. die Reibkraft unabhängig vom Aufprallpunkt immer möglichst gleich groß und damit insgesamt minimiert ist. Das hintere Ende des Abstreifers ist separat justierbar mittels eines feststellbaren Gelenks. Dies erlaubt es, den gleichen Applikator bei unterschiedlichem Bodenabstand optimal an die Zielobjekte heranzuführen.

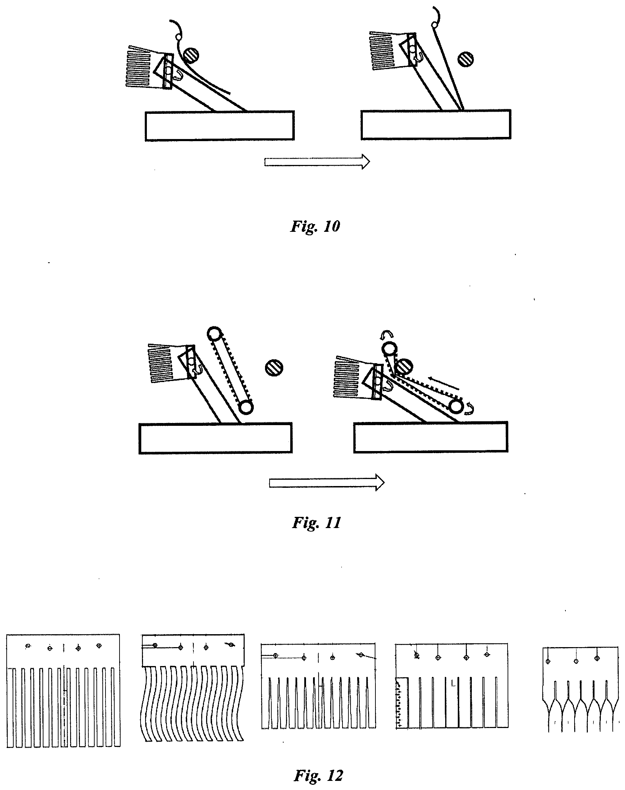

Der in Figur 10 gezeigte elastische Abstreiferteil ist im Ruhezustand ungebogen oder nur leicht gebogen (nicht dargestellt). Er wird an einem Punkt fixiert, vornehmlich am Fixierungspunkt des Endabstreiferteils, und ist entweder durch Dehnung oder durch Biegung und/oder schwimmende Aufhängungen in der Lage, Energie aufzunehmen und gleichmäßig wieder abzugeben. Dadurch wird der Aufprall nochmal vermindert, ohne dass die Geometrie am hinteren Applikatorende verändert wird. Zur Minimierung der Reibung wird er Abstreifer aus gleitfähigem Polymer, z.B. Polyurethan, hergestellt.

Um zwei leichtgängige Rollen mit Mittelführung (Raupenkettenprinzip) oder Randführung wird ein Elastikband als Abstreifer wie in Figur 11 gezeigt gespannt. Beim Berühren eines Zielobjektes wirkt es im ersten Moment als Dämpfung und dreht sich dann bei weiterer Vorwärtsbewegung mit, damit Reibungskräfte und Abrieb auf dem Zielobjekt vermeiden werden. Optionale Noppen auf dem Band führen Gräser und generell schmale Pflanzen nach unten zum Applikator unter dem primären Arm hindurch und lassen sie nicht abgleiten, solange kein Zielobjekt das Band drehen lässt.

Mehrere Applikatortypen sind in Figur 12 gezeigt. Die gerade steuernde Bodenführung kann durch lamellenartige Applikatoren erfolgen, bei denen jede einzelne Lamelle mit Ihren Seitenkanten führt. Applikatoren mit Wellenschnitt können Grashalme stärker verletzen und dementsprechend Strom besser einleiten. Wird das untere Ende von Applikatoren um 90° gedreht, wird die Geradeausführung verstärkt. Nach hinten schmaler werdende Applikatoren führen den Gesamtapplikator gut auf dem Boden, können sich aber weniger zusetzen. Löcher in Randlamellen lassen isolierende Beschichtungen besser haften bzw. erlauben die Anbringung von Isolatoren (nicht gezeigt).

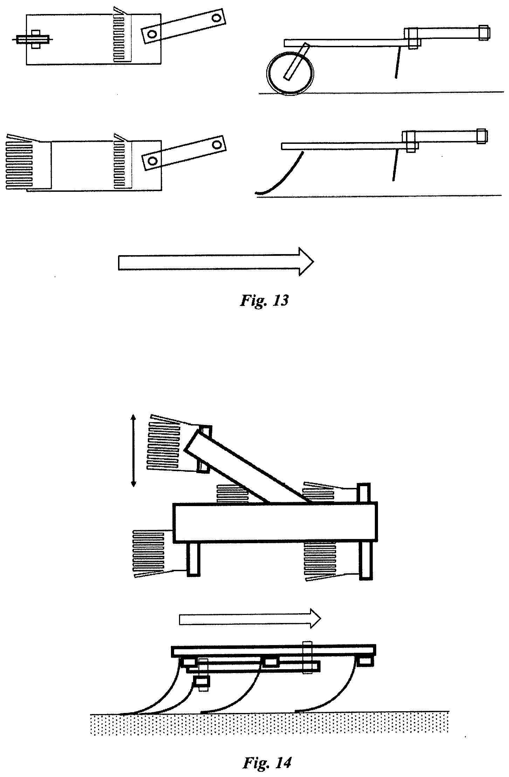

Die Figur 13 zeigt unterschiedliche Mehrfachapplikatoren mit hinterer Führung. Zweipolige höhenselektive Applikatoren laufen höhengeführt. Das hintere Schneidrad ist nur in der Mitte auf einem schmalen Rand elektrisch leitend ist. Die Zeichnung stellt das primäre Lager, den primären Applikatorarm, das sekundäre Lager und die spezielle Applikatoreinheit dar. Der vordere Applikator ist so hoch angebracht, dass er zielgemäß niedrige Pflanzen nicht berührt aber hohe Pflanzen kontrollieren und beseitigen kann. Das Schneidrad ist ein typischer Applikator, für den eine nachlaufende Führung extrem wichtig ist, damit er mit wenig Kraftaufwand genutzt werden kann und Zielobjekte präzise umfährt. Er kann auch als feststehender schmaler Applikator (nicht gezeigt) ausgebildet sein. Höhenselektiv arbeitende Applikatoren sind an den Seiten isoliert und geben nur im unteren Bereich Strom ab oder nehmen ihn dort auf.

Bei gewünscht flächigem Berühren kann das Schneidrad alternativ auch durch einen flächigen Applikator ersetzt werden. Beide Teilapplikatoren können auch als ein elektrischer Pol betrieben werden.

Die Figur 14 zeigt den Grundtyp einer Schwingapplikatoranordnung mit einem gelenkig angeordneten Schwingapplikator im funktionalen Kontext von geradeauslaufenden Applikatoren, die den Bereich zwischen den Reihen neben dem Schwingapplikator geradlinig bearbeiten. Außerdem ist ein weiterer statisch in der Reihe angeordneter Applikator (hier in Fahrtrichtung vorne) angeordnet, der als zweiter elektrischer Pol den Schluss des Stromkreises ermöglicht.

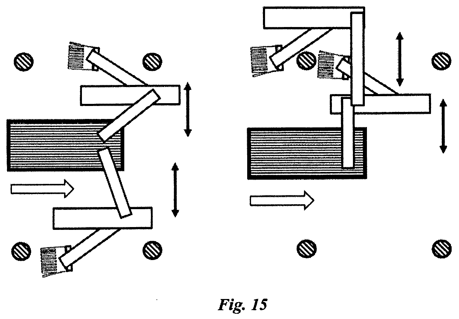

Die Figur 15 zeigt ein Transportfahrzeug mit möglichen Beispielpositionen der Geräteträger und der Applikatorvorrichtung in Relation zu den zu bearbeitenden Hindernissen. Die Applikatorvorrichtungen werden mit Aktoren und zugehöriger Sensorik (nicht gezeigt) an die Reihenbreiten oder Grundpositionen der zu umfahrenden Objekte oder Hindernisse angepasst. Es wurde nur eine der möglichen Applikatortypen hier stilisiert eingezeichnet. Das Fahrzeug ist hier sehr abstrakt dargestellt, da es sich sowohl um ein erdgebundenes Fahrzeug, Teil einer anderweitig bewegten mobilen Traverse oder auch um ein schwimmendes oder fliegendes Transportfahrzeug handeln kann. Die Applikatorvorrichtungen können vor, hinter, neben und unter dem Fahrzeug positioniert sein.

## Patentansprüche

1. Vorrichtung eingerichtet zum Schieben und/oder Ziehen mittels eines Fahrzeuges über einen Bodenbereich und zum Behandeln von Pflanzen mit einem Applikator, wobei der Applikator an einem Applikatorhalter befestigt ist, und die Vorrichtung einen primärer Arbeitsarm aufweist, an dessen erstem Ende ein Geräteträger gelenkig angeordnet ist und an dessen zweitem Ende der Applikatorhalter gelenkig angeordnet ist, wobei das gelenkige Anordnen von Geräteträger und Applikatorhalter mittels zweier Drehgelenke mit im Wesentlichen parallelen Achsen ausgebildet ist, eine Seite des primären Arbeitsarms in einem spitzen Winkel zum Geräteträger angeordnet ist und an einer gegenüberliegenden Seite des primären Arbeitsarms ein Abstreifer angeordnet ist, ***dadurch gekennzeichnet, dass*** am Geräteträger eine um eine erste Achse drehbare Scheibe angeordnet ist und der primäre Arbeitsarm um eine zur ersten Achse parallele Achse drehbar an der Scheibe angeordnet ist.

2. Vorrichtung nach Anspruch 1, ***dadurch gekennzeichnet, dass*** die Vorrichtung eine Positioniereinrichtung aufweist, wobei die Positioniereinrichtung den primären Arbeitsarm in einer definierten Position zum Geräteträger hält.

3. Vorrichtung nach Anspruch 2, ***dadurch gekennzeichnet, dass*** die Positioniereinrichtung einen Motor aufweist, mit dem der primäre Arbeitsarm relativ zum Geräteträger linear oder drehend bewegbar ist.

4. Vorrichtung nach einem der Ansprüche 1 bis 3, ***dadurch gekennzeichnet, dass*** die Vorrichtung einen Rückstellmechanismus aufweist, der den primären Arbeitsarm nach einer Drehung des primären Arbeitsarms relativ zum Geräteträger in die definierte Position zurückbewegt.

5. Vorrichtung nach einem der vorhergehenden Ansprüche, ***dadurch gekennzeichnet, dass*** der Abstreifer gelenkig am primären Arbeitsarm angeordnet ist und/oder der Abstreifer zwei Teilstücke aufweist, die gelenkig aneinander befestigt sind.

6. Vorrichtung nach einem der vorhergehenden Ansprüche, ***dadurch gekennzeichnet, dass*** der Abstreifer elastisch ausgebildet ist und/oder elastisch gelagert ist und/oder der Abstreifer ein um zwei drehbare Rollen geführtes Band aufweist.

7. Vorrichtung nach einem der vorhergehenden Ansprüche, ***dadurch gekennzeichnet, dass*** am primären Arbeitsarm mehrere Applikatorhalter angeordnet sind und/oder am Geräteträger mehrere Arbeitsarme angeordnet sind.

8. Vorrichtung nach Anspruch 7, ***dadurch gekennzeichnet, dass*** die Arbeitsarme mit einem oder mehreren Motoren vorzugsweise unabhängig voneinander bewegbar sind und/oder die Arbeitsarme sternförmig am Geräteträger angeordnet sind.

9. Vorrichtung nach einem der vorhergehenden Ansprüche, ***dadurch gekennzeichnet, dass*** der Applikatorhalter eine runde Applikatorabdeckung aufweist und der Applikatorhalter relativ zur Applikatorabdeckung drehbeweglich gelagert ist.

10. Vorrichtung nach einem der vorhergehenden Ansprüche, ***dadurch gekennzeichnet, dass*** der Geräteträger und/oder der primäre Arbeitsarm und/oder der Applikatorhalter mit einer Aktorik in Verbindung stehen, die mit einer Sensoreinrichtung in Verbindung steht, um entsprechend mit der Sensoreinrichtung ermittelten Daten auf die Aktorik einzuwirken, um eine Berührung eines Hindernisses zu vermeiden.

11. Vorrichtung nach einem der vorhergehenden Ansprüche, ***dadurch gekennzeichnet, dass*** der Geräteträger und/oder der primäre Arbeitsarm und/oder der Applikatorhalter eine Einrichtung zur Erfassung der Bodenimpedanz aufweist, um eine Intensität des Applikators zu variieren, und/oder mit einer Einrichtung die Geschwindigkeit der Vorrichtung relativ zum Boden erfasst und an einen Rechner übermittelt wird, um mittels Messung der Impedanz zwischen Elektroden den absoluten und relativen Abstand der Hindernisse zueinander zu berechnen..

12. Fahrzeug mit einer daran befestigten Vorrichtung zum Schieben und/oder Ziehen der daran befestigten Vorrichtung über einen Bodenbereich, ***dadurch gekennzeichnet, dass*** die daran befestigte Vorrichtung eine Vorrichtung nach einem der Ansprüche 1 bis 11 ist, wobei der Geräteträger am Fahrzeug befestigt ist und/oder der Geräteträger mit einem Aktor relativ zum Fahrzeug beweglich ist.

13. Verwendung einer Vorrichtung nach einem der Ansprüche 1 bis 11, wobei die Vorrichtung mit einem Fahrzeug über einen Bodenbereich geschoben und vorzugsweise gezogen wird, ***dadurch gekennzeichnet, dass*** mit einer Einrichtung zur Erfassung der Bodenimpedanz am Geräteträger und/oder am primären Arbeitsarm und/oder am Applikatorhalter die Bodenimpedanz erfasst wird und an einen Rechner übermittelt wird, der die Anzahl von Hindernissen ermittelt.

14. Verwendung nach Anspruch 13 *, **dadurch gekennzeichnet, dass*** mit der Einrichtung zur Erfassung der Bodenimpedanz am Geräteträger und/oder am primären Arbeitsarm und/oder am Applikatorhalter die Bodenimpedanz und mit einer Einrichtung die Geschwindigkeit der Vorrichtung relativ zum Boden erfasst wird und an einen Rechner übermittelt wird, der auf eine Aktorik einwirkt, um eine Berührung eines Hindernisses zu vermeiden.

## Claims

1. Device configured for pushing and/or pulling by means of a vehicle over a ground area and for treating plants with an applicator, wherein the applicator is attached to an applicator holder, and the device has a primary working arm, at the first end of which an implement carrier is hinged and at the second end of which the applicator holder is hinged, wherein the hinged arrangement of the implement carrier and the applicator holder is formed by means of two swivel joints with substantially parallel axes, one side of the primary working arm is arranged at an acute angle to the implement carrier and a scraper is arranged on an opposite side of the primary working arm,
**characterised in that** a disc rotatable about a first axis is arranged on the implement carrier and the primary working arm is arranged on the disc so as to be rotatable about an axis parallel to the first axis.

2. Device according to claim 1, **characterised in that** the device has a positioning means, wherein the positioning means holds the primary working arm in a defined position relative to the implement carrier.

3. Device according to claim 2, **characterised in that** the positioning means has a motor with which the primary working arm can be moved linearly or rotated relative to the implement carrier.

4. Device according to any one of claims 1 to 3, **characterised in that** the device has a return mechanism which moves the primary working arm back into the defined position after the primary working arm has rotated relative to the implement carrier.

5. Device according to any one of the preceding claims, **characterised in that** the scraper is hinged to the primary working arm and/or the scraper comprises two parts that are hinged to each other.

6. Device according to any one of the preceding claims, **characterised in that** the scraper is elastically configured and/or elastically mounted and/or the scraper has a belt guided around two rotatable rollers.

7. Device according to any one of the preceding claims, **characterised in that** several applicator holders are arranged on the primary working arm and/or several working arms are arranged on the implement carrier.

8. Device according to claim 7, **characterised in that** the working arms can be moved with one or more motors, preferably independently of one another, and/or the working arms are arranged in a star shape on the implement carrier.

9. Device according to any one of the preceding claims, **characterised in that** the applicator holder has a round applicator cover and the applicator holder is mounted so that it can rotate relative to the applicator cover.

10. Device according to any one of the preceding claims, **characterised in that** the implement carrier and/or the primary working arm and/or the applicator holder are connected to an actuator system which is connected to a sensor means in order to act on the actuator system in accordance with data determined by the sensor means in order to avoid contact with an obstacle.

11. Device according to any one of the preceding claims, **characterised in that** the implement carrier and/or the primary working arm and/or the applicator holder has a means for detecting the ground impedance in order to vary the intensity of the applicator, and/or with a means that detects the speed of the device relative to the ground and transmits it to a computer in order to calculate the absolute and relative distance between the obstacles by measuring the impedance between electrodes.

12. Vehicle with a device attached to it for pushing and/or pulling the device attached to it over a ground area, **characterised in that** the device attached to it is a device according to any one of claims 1 to 11, wherein the implement carrier is attached to the vehicle and/or the implement carrier is movable relative to the vehicle by means of an actuator.

13. Use of the device according to any one of claims 1 to 11, wherein the device is pushed and preferably pulled over a ground area by a vehicle, **characterised in that** a means for detecting the ground impedance on the implement carrier and/or on the primary working arm and/or on the applicator holder detects the ground impedance and transmits it to a computer, which determines the number of obstacles.

14. Use according to claim 13, **characterised in that** the means for detecting the ground impedance on the implement carrier and/or on the primary working arm and/or on the applicator holder detects the ground impedance and a means detects the speed of the device relative to the ground and transmits this to a computer, which acts on an actuator to avoid contact with an obstacle

## Revendications

1. Dispositif adapté pour être poussé et/ou tiré au moyen d'un véhicule sur une zone de sol et pour traiter des plantes avec un applicateur, l'applicateur étant fixé à un support d'applicateur, et le dispositif présentant un bras de travail principal, à la première extrémité duquel est agencé de manière articulée un porte-outil et à la deuxième extrémité duquel est agencé de manière articulée le support d'applicateur, l'agencement articulé du porte-outil et du support d'applicateur étant réalisé au moyen de deux articulations tournantes avec des axes essentiellement parallèles, un côté du bras de travail principal étant agencé selon un angle aigu par rapport au porte-outil et un racleur étant agencé sur un côté opposé du bras de travail principal, **caractérisé en ce qu'**un disque pouvant tourner autour d'un premier axe est agencé sur le porte-outil et le bras de travail principal est agencé de manière à pouvoir tourner autour d'un axe parallèle au premier axe sur le disque.

2. Dispositif selon la revendication 1, **caractérisé en ce que** le dispositif présente un appareil de positionnement, l'appareil de positionnement maintenant le bras de travail principal dans une position définie par rapport au porte-outil.

3. Dispositif selon la revendication 2, **caractérisé en ce que** l'appareil de positionnement présente un moteur avec lequel le bras de travail principal peut être déplacé de manière linéaire ou rotative par rapport au porte-outil.

4. Dispositif selon l'une quelconque des revendications 1 à 3, **caractérisé en ce que** le dispositif présente un mécanisme de rappel qui ramène le bras de travail principal dans la position définie après une rotation du bras de travail principal par rapport au porte-outil.

5. Dispositif selon l'une quelconque des revendications précédentes, **caractérisé en ce que** le racleur est agencé de manière articulée sur le bras de travail principal et/ou le racleur présente deux parties qui sont fixées l'une à l'autre de manière articulée.

6. Dispositif selon l'une quelconque des revendications précédentes, **caractérisé en ce que** le racleur est réalisé sous forme élastique et/ou est monté de manière élastique et/ou le racleur présente une bande guidée autour de deux rouleaux rotatifs.

7. Dispositif selon l'une quelconque des revendications précédentes, **caractérisé en ce que** plusieurs supports d'applicateur sont agencés sur le bras de travail principal et/ou plusieurs bras de travail sont agencés sur le porte-outil.

8. Dispositif selon la revendication 7, **caractérisé en ce que** les bras de travail peuvent être déplacés de préférence indépendamment les uns des autres avec un ou plusieurs moteurs et/ou les bras de travail sont agencés en étoile sur le porte-outil.

9. Dispositif selon l'une quelconque des revendications précédentes, **caractérisé en ce que** le support d'applicateur présente un couvercle d'applicateur rond et le support d'applicateur est monté de manière mobile en rotation par rapport au couvercle d'applicateur.

10. Dispositif selon l'une quelconque des revendications précédentes, **caractérisé en ce que** le porte-outil et/ou le bras de travail principal et/ou le support d'applicateur sont en liaison avec un actionneur qui est en liaison avec un appareil capteur afin d'agir sur l'actionneur en fonction de données déterminées par l'appareil capteur afin d'éviter un contact avec un obstacle.

11. Dispositif selon l'une quelconque des revendications précédentes, **caractérisé en ce que** le porte-outil et/ou le bras de travail principal et/ou le support d'applicateur présente un appareil pour détecter l'impédance du sol afin de varier une intensité de l'applicateur, et/ou un appareil qui détecte la vitesse du dispositif par rapport au sol et la transmet à un ordinateur afin de calculer la distance absolue et relative des obstacles les uns par rapport aux autres par mesure de l'impédance entre les électrodes.

12. Véhicule avec un dispositif fixé à celui-ci pour pousser et/ou tirer le dispositif fixé à celui-ci sur une zone de sol, **caractérisé en ce que** le dispositif fixé à celui-ci est un dispositif selon l'une quelconque des revendications 1 à 11, le porte-outil étant fixé au véhicule et/ou le porte-outil étant mobile par rapport au véhicule avec un actionneur.

13. Utilisation d'un dispositif selon l'une quelconque des revendications 1 à 11, le dispositif étant poussé et de préférence tiré avec un véhicule sur une zone de sol, **caractérisée en ce que** l'impédance du sol est détectée avec un appareil de détection de l'impédance du sol sur le porte-outil et/ou sur le bras de travail principal et/ou sur le support d'applicateur, et transmise à un ordinateur qui détermine le nombre d'obstacles.

14. Utilisation selon la revendication 13, **caractérisée en ce que** l'impédance du sol est détectée avec l'appareil de détection de l'impédance du sol sur le porte-outil et/ou sur le bras de travail principal et/ou sur le support d'applicateur et la vitesse du dispositif par rapport au sol est détectée avec un appareil et transmise à un ordinateur qui agit sur un actionneur afin d'éviter un contact avec un obstacle.
